# EUROPEAN PATENT APPLICATION

(11) **EP 4 542 699 A1**
(43) Date of publication of application: **23.04.2025**
(21) Application number: 24183515.6
(22) Date of filing: 20.06.2024
(51) Int. Cl.: H01M 10/04, H01M 10/0583, H01M 10/0525

(54) **SEPARATOR CLAMPING DEVICE, AND METHOD AND SYSTEM FOR MANUFACTURING ELECTRODE ASSEMBLY FOR RECHARGEABLE BATTERY USING SAME**

(30) Priority: 19.10.2023 KR 20230140641
(71) Applicant: SAMSUNG SDI CO., LTD., Giheung-gu Yongin-si, Gyeonggi-do 17084 (KR)
(72) Inventor: KI, Daewook, 17084 Yongin-Si (KR); IM, Hobin, 17084 Yongin-Si (KR)
(74) Representative: Marks & Clerk LLP

(57) **Abstract**

A separator clamping device includes a body portion including a vacuum passage, the vacuum passage being connected to a vacuum device, a first separator fixing portion on an upper surface of the body portion, the first separator fixing portion being connected to the vacuum passage and being configured to fix a separator onto the upper surface of the body portion by a vacuum suction, and a second separator fixing portion on a side surface of the body portion, the second separator fixing portion being connected to the vacuum passage and being configured to fix the separator onto the side surface of the body portion by a vacuum suction.

## Description

### BACKGROUND

### 1. Field

Aspects of embodiments of the present disclosure relate to a separator clamping device, and method and system for manufacturing an electrode assembly for a rechargeable battery using same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

A secondary battery generally includes an electrode assembly composed of a positive electrode and a negative electrode, a case accommodating the same, and electrode terminals connected to the electrode assembly Furthermore, the electrode assembly may include a separator between the positive electrode and the negative electrode. The separator electrically insulates the positive electrode from the negative electrode while separating the positive electrode from the negative electrode.

The above information disclosed in this Background section is for enhancement of understanding of the background of the present disclosure, and therefore, it may contain information that does not constitute related (or prior) art.

### SUMMARY

A separator clamping device according to one embodiment of the present disclosure includes a body portion having a vacuum passage connected to a vacuum providing device, a first separator fixing portion connected to the vacuum passage and fixing a separator onto an upper surface of the body portion by a vacuum suction method, and a second separator fixing portion connected to the vacuum passage and fixing the separator onto a side surface of the body portion by a vacuum suction method.

According to one embodiment, the first separator fixing portion may include at least one first vacuum suction hole, and the second separator fixing portion may include at least one second vacuum suction hole.

According to one embodiment, the number of the at least one first vacuum suction hole may be equal to the number of the at least one second vacuum suction hole.

According to one embodiment, a diameter of the second vacuum suction hole may be 1 mm, and a pitch of the second vacuum suction hole may be 12 mm.

According to one embodiment, a diameter of the second vacuum suction hole may be 1 mm, and a pitch of the second vacuum suction hole may be 25 mm.

According to one embodiment, the number of the at least one second vacuum suction hole may be determined based on a size of the separator.

According to one embodiment, the second separator fixing portion may protrude from the side surface of the body portion, the side surface of the body portion being perpendicular to the upper surface of the body portion.

According to one embodiment, the separator clamping device may further include at least one connection portion formed to connect the body portion to the vacuum providing device.

A method for manufacturing an electrode assembly for a rechargeable battery, according to one embodiment of the present disclosure, includes fixing at least a part of a separator to an upper surface of a separator clamping device by a first separator fixing portion, fixing a first surface of a cut end of the separator to a side surface of the separator clamping device by a second separator fixing portion, moving and arranging the separator clamping device, such that a second surface of the cut end of the separator is in contact with a side surface of a stacking table, and stacking an electrode plate and the separator on an upper side of the stacking table.

According to one embodiment, fixing the first surface of the cut end of the separator by the second separator fixing portion may include gripping, by a gripper, an electrode assembly manufactured on the upper side of the stacking table, cutting, by a cutter, a portion of the separator between the electrode assembly and the separator clamping device, such that the cut end of the separator is defined and is separated from the electrode assembly, discharging the electrode assembly from the stacking table, and fixing, by a pusher, the first surface of the cut end of the separator to the second separator fixing portion by pressurizing the cut end of the separator.

According to one embodiment, stacking the electrode plate and the separator on the upper side of the stacking table may include stacking the electrode plate and the separator on the upper side of the stacking table while the separator clamping device contacts the side surface the stacking table through the cut end of the separator, the separator clamping device laterally moving together with the side surface the stacking table.

According to one embodiment, each of the first separator fixing portion and the second separator fixing portion may fix the separator by a vacuum suction method.

According to one embodiment, the first separator fixing portion may include at least one first vacuum suction hole, the second separator fixing portion includes at least one second vacuum suction hole, and the number of the at least one first vacuum suction hole is equal to the number of the at least one second vacuum suction hole.

According to one embodiment, the method may further include moving and arranging the separator clamping device to be separated from the stacking table in a state where the electrode plate is completely stacked on the upper side of the stacking table.

A system for manufacturing an electrode assembly for a rechargeable battery, according to one embodiment of the present disclosure, includes a stacking table configured to stack an electrode plate and a separator, the stacking table being moveable in a vertical direction, and a separator clamping device adjacent to a side surface of the stacking table and being moveable a horizontal direction, the separator clamping device being configured to fix an end of the separator.

According to one embodiment, the separator clamping device may include a first separator fixing portion on an upper surface of separator clamping device, the first separator fixing portion being configured to fix the separator onto the upper surface of the separator clamping device by a vacuum suction, and a second separator fixing portion on a side surface of the separator clamping device, the second separator fixing portion being configured to fix the separator onto the side surface of the separator clamping device by a vacuum suction.

According to one embodiment, the separator clamping device may include a vacuum passage connected to a vacuum providing device, and each of the first separator fixing portion and the second separator fixing portion may include at least one vacuum suction hole connected to the vacuum passage.

According to one embodiment, the system may further include a gripper configured to grip an electrode assembly made by stacking the electrode plate and the separator on an upper side of the stacking table, a cutter configured to cut the separator, and a pusher configured to pressurize downward the end of the separator cut by the cutter.

According to one embodiment, at least one part of the separator connected to the electrode assembly gripped by the gripper may be fixed to the separator clamping device by the first separator fixing portion.

According to one embodiment, the end of the separator pressurized by the pusher may be fixed to the separator clamping device by the second separator fixing portion.

At least some of the above and other features of the invention are set out in the claims.

These and other aspects and features of the present disclosure will be described in or will be apparent from the following description of embodiments of the present disclosure. However, aspects and features of the present disclosure are not limited to those described above, and other aspects and features not mentioned will be clearly understood by a person skilled in the art from the detailed description, described below

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing a separator clamping device according to an embodiment of the present disclosure;
FIG. 2 illustrates a plan view showing a separator clamping device according to an embodiment of the present disclosure;
FIG. 3 illustrates a side view showing a separator clamping device according to an embodiment of the present disclosure;
FIG. 4 illustrates a flowchart showing an example of an electrode assembly manufacturing method using a separator clamping device, according to an embodiment of the present disclosure;
FIG. 5 illustrates a schematic view showing an example of an electrode assembly manufacturing system using a separator clamping device, according to an embodiment of the present disclosure;
FIG. 6 illustrates a schematic view showing an example of gripping an electrode assembly manufactured on an upper side of a stacking table by a gripper, according to an embodiment of the present disclosure;
FIG. 7 illustrates a schematic view showing an example in which a separator connected between an electrode assembly and a separator clamp device is cut by a cutter, according to an embodiment of the present disclosure;
FIG. 8 illustrates a schematic view showing an example in which an end of a separator cut by a pusher is pressurized and fixed to a separator clamping device, according to an embodiment of the present disclosure;
FIG. 9 illustrates a schematic view showing an example in which a stacked electrode assembly is discharged from a stacking table, according to an embodiment of the present disclosure;
FIG. 10 illustrates a schematic view showing an example in which a separator clamping device moves to be arranged on a side surface of a stacking table, according to an embodiment of the present disclosure;
FIG. 11 illustrates a schematic view showing an example in which a separator clamping device moves in a horizontal direction together with a stacking table, according to an embodiment of the present disclosure; and
FIG. 12 illustrates a schematic view showing an example in which an electrode plate and a separator are stacked on an upper side of a stacking table, according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Furthermore, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In a stacked battery or a method/system for manufacturing a stacked battery according to embodiments of the present disclosure, one of the stacked battery or a wound battery is selected, and the selected battery is described as having a general structure, and commonly applied technologies describe the general structure of stacked/wound type batteries.

In the present disclosure, an "electrode assembly" may be formed or manufactured by winding or stacking a stacked body of a positive electrode plate, a separator, and a negative electrode plate formed in a thin plate or film shape. In some embodiments, the positive electrode plate may be formed by applying a positive electrode active material, such as graphite or carbon, to a positive electrode electron collection plate formed of a metal foil, such as aluminum. Furthermore, the negative electrode plate may be formed by applying a negative electrode active material, such as a transition metal oxide to a negative electrode electron collection plate formed of a metal foil, such as copper or nickel.

In the present disclosure, a "separator" may refer to an intermediate membrane that isolates a positive electrode from a negative electrode within a battery and continuously maintains ionic conductivity, thereby enabling charging and discharging of the battery. Furthermore, the separator may be made of, for example, polyethylene, polypropylene, polyvinylidene fluoride, or a multilayer film of two or more layers thereof but is not limited thereto.

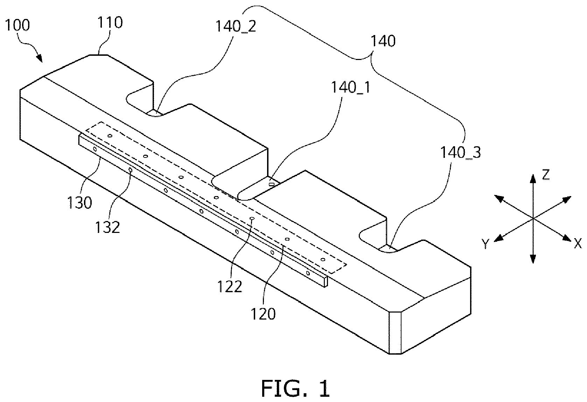

FIGS. 1, 2, and 3 illustrate respectively a perspective view, a plan view, and a side view showing a separator clamping device 100 according to an embodiment of the present disclosure. Referring to FIGS. 1 to 3, the separator clamping device 100 may include a body portion 110, a first separator fixing portion 120, a second separator fixing portion 130, and a connection portion 140.

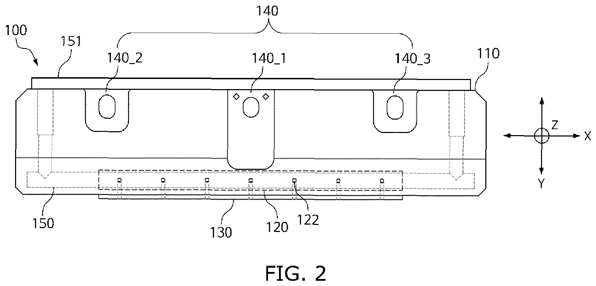

In one embodiment, the body portion 110 may include a vacuum passage 150 including at least one outlet connected to a vacuum providing device 151 (a vacuum device) and at least one connection passage connected to the first separator fixing portion 120 and/or the second separator fixing portion 130. As illustrated in FIG. 2, the vacuum passage 150 (indicated with a dashed line) may have an approximate "angled C" shape according to positions of the vacuum providing device 151 and the first and second separator fixing portions 120 and 130 connected to the at least one outlet (e.g., connected to each of a plurality of outlets).

For example, as illustrated in FIG. 2, the vacuum passage 150 may be within (e.g., completely within) the body portion 110, and may extend (e.g., continuously) along an entire length of the body portion 110 (e.g., in the X direction). An outlet (e.g., a doorway) of the vacuum passage 150 may be formed on each of the left and right sides of one side surface (e.g., one side surface facing a surface on which the second separator fixing portion 130 is formed) of the body portion 110. Herein, the left and right outlets of the vacuum passage 150 may be formed axisymmetrically (e.g., with respect to a center axis of the body portion 110 along the Y-axis). Furthermore, the vacuum passage 150 may be formed to be introduced into the body portion 110 from the outlet in a first direction (e.g., in the Y-axis direction). Furthermore, the vacuum passage 150 may include a connection passage bent and extending in a second direction (e.g., in the X-axis direction) from the outlet in the body portion 110 in a "L" shape (e.g., as viewed in a top view). In this way, the vacuum passage 150 including the outlet and the connection passage may be substantially axisymmetrically formed within the body portion 110. In another example, the shape of the vacuum passage 150 may be modified in any suitable manner and/or shape to provide vacuum to the first separator fixing portion 120 and the second separator fixing portion 130.

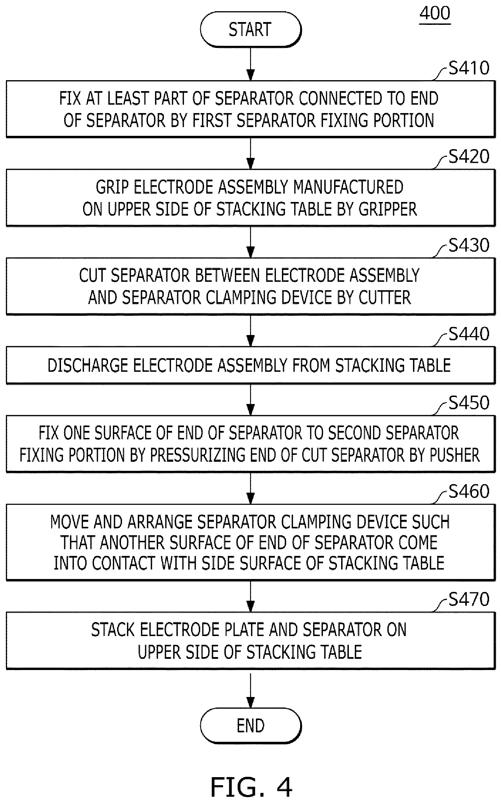

As illustrated in FIGS. 1-3, the first separator fixing portion 120 may be formed on an upper surface of the body portion 110 and may be connected to at least a part of the vacuum passage 150. As described below with reference to FIGS. 4 to 12, the first separator fixing portion 120 may fix a separator on the upper surface of the body portion 110 to the body portion 110 by a vacuum suction method. For example, the first separator fixing portion 120 may include at least one first vacuum suction hole 122. The at least one first vacuum suction hole 122 may penetrate the upper surface of the body portion 110 to be connected to at least a part of the vacuum passage 150 (e.g., the at least one first vacuum suction hole 122 may be in fluid communication with the connection passage of the vacuum passage 150). Accordingly, at least a part of the separator positioned in or in contact with the at least one first vacuum suction hole 122 may be fixed to the upper surface of the body portion 110 by the vacuum suction force provided through the vacuum passage 150.

As further illustrated in FIGS. 1-3, the second separator fixing portion 130 may be formed on a side surface of the body portion 110 to be connected to at least a part of the vacuum passage 150 (e.g., the second separator fixing portion 130 may be formed on a surface of the body portion 110 that is perpendicular or orthogonal to a surface of the body portion 110 supporting the first separator fixing portion 120). For example, as illustrated in FIG. 1, the second separator fixing portion 130 may be configured to protrude from the side surface of the body portion 110 to effectively adsorb and/or detach at least a part of the separator (e.g., an end of the separator). In another example, the second separator fixing portion 130 may be formed so as not to protrude from the side surface of the body portion 110. As described below with reference to FIGS. 4 to 12, the second separator fixing portion 130 may fix a separator on the side surface of the body portion 110 by using a vacuum suction method.

For example, the second separator fixing portion 130 may include at least one second vacuum suction hole 132. The at least one second vacuum suction hole 132 may penetrate the side surface of the body portion 110 to be connected to at least a part of the vacuum passage 150 (e.g., the at least one second vacuum suction hole 132 may be in fluid communication with the connection passage of the vacuum passage 150). Accordingly, at least a part (e.g., an end of the separator) of the separator positioned in or in contact with the at least one second vacuum suction hole 132 may be fixed to the side surface of the body portion 110 by the vacuum suction force provided through the vacuum passage 150.

In an embodiment, the number of first vacuum suction holes 122 included in the first separator fixing portion 120 may be equal to the number of second vacuum suction holes 132 included in the second separator fixing portion 130. Accordingly, the vacuum suction forces respectively provided by the first separator fixing portion 120 and the second separator fixing portion 130 may be maintained approximately the same as each other (e.g., may be equal to each other).

In an embodiment, the number of first vacuum suction holes 122 and/or the number of second vacuum suction holes 132 may be determined based on a size, a thickness, a material, and so on of a separator to be adsorbed. For example, as the size (e.g., length) of the separator increases, the number of first vacuum suction holes 122 and/or the number of second vacuum suction holes 132 may be increased within a range that does not leave a suction mark on the separator. In another example, as the thickness of the separator increases, the number of first vacuum suction holes 122 and/or the number of second vacuum suction holes 132 may be increased within a range that does not leave a suction mark on the separator. In another embodiment, a size of the first vacuum suction hole 122 and/or a size of the second vacuum suction hole 132 may be changed depending on a size, a thickness, a material, and so on of the separator to be adsorbed. In yet another embodiment, an arrangement form of the first vacuum suction holes 122 and/or an arrangement form of the second vacuum suction holes 132 may also be changed depending on the size, thickness, material, and so on of the separator to be adsorbed. For example, referring to FIG. 1, the first vacuum suction holes 122 may be arranged in one row, and the second vacuum suction holes 132 may be arranged in one row. In another example, the first vacuum suction holes 122 and/or the second vacuum suction holes 132 may be arranged in two or more rows depending on various characteristics of a separator to be adsorbed. In this way, the first separator fixing portion 120 and/or the second separator fixing portion 130 may also be changed in size (e.g., length, width, and/or area) according to a change in arrangement form or range of the first vacuum suction holes 122 and/or the second vacuum suction holes 132.

In an embodiment, an interval between at least two adjacent holes among the first vacuum suction holes 122 may be set to be equal to an interval between at least two adjacent holes among the second vacuum suction holes 132. Accordingly, the vacuum suction forces respectively provided by the first separator fixing portion 120 and the second separator fixing portion 130 may be maintained approximately the same as each other.

In an embodiment, an interval between at least two adjacent first vacuum suction holes 122 and/or an interval between at least two adjacent second vacuum suction holes 132 may be determined based on a size, a thickness, a material, and so on of a separator to be adsorbed. For example, as the size of the separator increases, the interval between at least two adjacent first vacuum suction holes 122 and/or the interval between at least two adjacent second vacuum suction holes 132 may be set to be reduced within a range that does not leave a suction mark on the separator. In another example, as the thickness of the separator increases, the interval between at least two adjacent first vacuum suction holes 122 and/or the interval between at least two adjacent second vacuum suction holes 132 may be set to be reduced within a range that does not leave a suction mark on the separator. Accordingly, the first separator fixing portion 120 and/or the second separator fixing portion 130 may also be changed in size. For example, referring to FIG. 1, the interval between adjacent ones of the first vacuum suction holes 122 may be constant, and the interval between adjacent ones of the second vacuum suction holes 132 may be constant.

In an embodiment, sizes of the first vacuum suction holes 122 and/or the second vacuum suction holes 132 or an interval (e.g., a pitch) between at least two adjacent holes may be determined based on a size, a material, and so on of a separator to be adsorbed. For example, in order to provide an appropriate vacuum suction force to the separator, diameters of the first vacuum suction holes 122 and/or the second vacuum suction hole 132 may be set to about 1 mm, and an interval or a pitch between at least two adjacent first vacuum suction holes 122 and/or second vacuum suction holes 132 may be set to about 12 mm to about 25 mm. The sizes or intervals of the first and second vacuum suction holes 122 and 132 may be changed depending on various characteristics of suction targets, a strength of the vacuum suction force to be provided, and so on.

In an embodiment, the connection portion 140 may connect the body portion 110 to the vacuum providing device 151. For example, the connection portion 140 may include one or more connection portions 140_1, 140_2, and 140_3 in which screw holes and so on are formed to fasten or connect the body portion 110 to the vacuum providing device 151 by using screws or so on. Herein, the one or more connection portions 140_1, 140_2, and 140_3 may be formed axisymmetrically to maintain consistency or balance of close contact of coupling surfaces of the body portion 110 and the vacuum providing device 151. For example, as illustrated in FIGS. 1 and 2, the connection portion 140 may include three connection portions (i.e., first through third connection portions 140_1, 140_2, and 140_3). In another example, the connection portion 140 may include less than three connection portions or more than three connection portions.

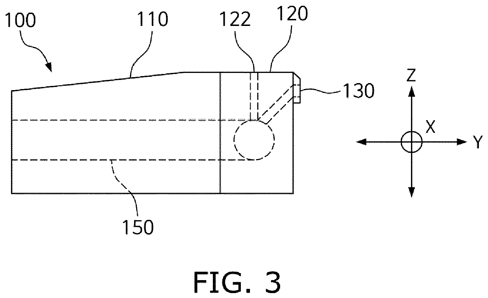

For example, as illustrated in FIG. 3, some parts of an upper surface of the body portion 110 to which the vacuum providing device 151 is connected may be inclined downwardly In another example, the upper surface of the body portion 110 may be formed to be completely flat so that the body portion 110 may have a substantially rectangular shape.

As described above, the separator clamping device 100 uses the vacuum suction forces provided by the first separator fixing portion 120 and the second separator fixing portion 130 connected to a vacuum providing device 151 through the vacuum passage 150, and accordingly, a separator may be fixed to the separator clamping device 100 without slipping during a process of manufacturing an electrode assembly. Furthermore, by adjusting sizes, the number, intervals, and so on of the first and second vacuum suction holes 122 and 132 respectively formed in the first separator fixing portion 120 and the second separator fixing portion 130 of the separator clamping device 100, a separator with various characteristics may be fixed without leaving a suction mark. Accordingly, a separator may be prevented from being misaligned during a process of manufacturing an electrode assembly.

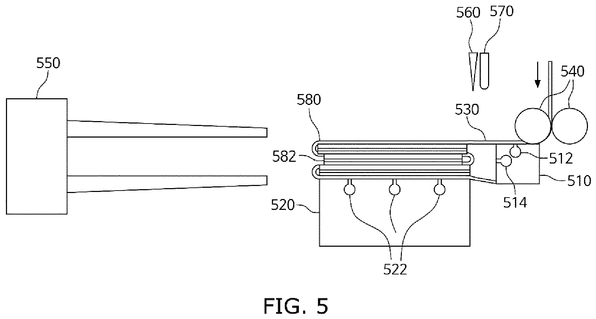

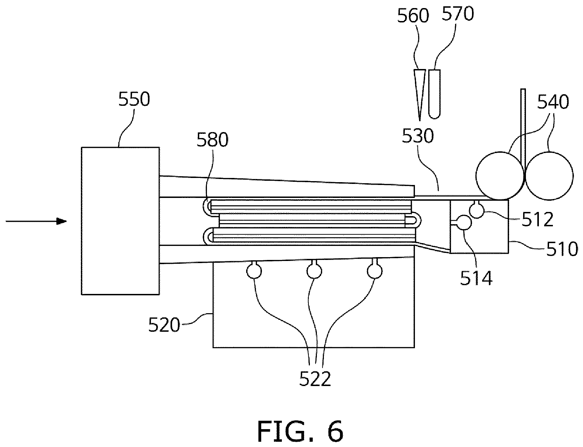

FIG. 4 illustrates a flowchart showing an example of an electrode assembly manufacturing method 400 using a separator clamping device, according to an embodiment of the present disclosure. FIG. 5 is a schematic view illustrating an example of an electrode assembly manufacturing system using a separator clamping device, according to an embodiment of the present disclosure, and FIGS. 6 to 12 illustrate schematic views showing examples of operations of the electrode assembly manufacturing method 400.

In an embodiment, referring to FIG. 5, an electrode assembly manufacturing system may include a separator clamping device 510, a stacking table 520, a roller 540 for moving a separator 530, a gripper 550, a cutter 560, and a pusher 570. Herein, the separator clamping device 510 may be the separator clamping device 100 described above with reference to FIGS. 1 to 3.

In general, an electrode assembly may be formed by winding or stacking a stacked body of a positive electrode plate, a separator, and a negative electrode plate formed in a thin plate or film shape. In some embodiments, the positive electrode plate may be formed by applying a positive electrode active material, such as graphite or carbon, to a positive electrode electron collection plate formed of a metal foil, such as aluminum. Furthermore, the negative electrode plate may be formed by applying a negative electrode active material, such as a transition metal oxide to a negative electrode electron collection plate formed of a metal foil, such as copper or nickel. In addition, the separator may be positioned between the positive plate and the negative plate to prevent electrical shorts and enable transition metal ions to move, and may be composed of, e.g., polyethylene, polypropylene, polyvinylidene fluoride, or a multilayer film of two or more layers thereof.

Referring to FIG. 5, an electrode assembly 580 may be formed by stacking electrode plates 582 (e.g., a positive electrode plate and a negative electrode plate) and the separator 530 on the stacking table 520. For example, the positive and negative electrode plates may be stacked on individual tables separated at left and right sides around the stacking table 520, and the separator 530 supplied from an upper direction may be folded in a zigzag shape as the stacking table 520 moves laterally. In some embodiments, the positive and negative electrode plates may be sequentially supplied onto an upper portion of the stacking table 520 from each of individual tables installed on both sides of the supplied separator 530, and the positive and negative electrode plates may be stacked alternately in internal spaces of the separator 530 folded in a zigzag shape.

Furthermore, the stacking table 520 may move in up, down, left, and right directions, and a height at which the electrode assembly 580 is stacked may be adjusted to be the same as a position at which the separator 530 is folded. For example, the stacking table 520 may move downwardly as stacking of the electrode assembly 580 progresses, and accordingly, the height at which the electrode assembly 580 is stacked may be adjusted to be the same as the position at which the separator 530 is folded.

By using the electrode assembly manufacturing system illustrated in FIG. 5, the electrode assembly manufacturing method 400 including operations S410 to S470 illustrated in FIG. 4 may be performed as described below in detail.

The electrode assembly manufacturing method 400 may start with operation S410 of fixing at least a part of a separator connected to an end of the separator by using a first separator fixing portion (e.g., fixing at least a part of an edge of a separator to a first separator fixing portion). In an embodiment, referring to FIG. 5, at least a part of the separator 530 connected to an end of the separator 530 (e.g., an edge of the separator 530) may be fixed by the first separator fixing portion 512 formed on an upper surface of the separator clamping device 510. Herein, the first separator fixing portion 512 may include at least one first vacuum suction hole (e.g., the first separator fixing portion 512 may be the first separator fixing portion 120 described previously with reference to FIGS. 1-3). Furthermore, the first separator fixing portion 512 may fix the separator 530 by a vacuum suction method through the first vacuum suction hole by using the vacuum provided from a vacuum providing device. For example, referring to FIG. 5, the upper surface of the separator clamping device 510 may be positioned in parallel to an upper surface of the stacking table 520, so an edge of the separator 530 connected to the first separator fixing portion 512 (which is on the upper surface of the separator clamping device 510) may extend in parallel to the upper surfaces of the stacking table 520 and the separator clamping device 510.

The electrode assembly 580 manufactured on an upper side of the stacking table 520 may be gripped by the gripper 550 (S420). In an embodiment, referring to FIG. 6, the electrode assembly 580 manufactured on the upper side of the stacking table 520 may be gripped by the gripper 550. In some embodiments, the gripper 550 may move laterally (along arrow in FIG. 6) to approach the electrode assembly 580 from the outside of the stacking table 520. Furthermore, in a state where the electrode assembly 580 is positioned between upper and lower tongs of the gripper 550, as the upper and lower tongs of the gripper 550 pinch upper and lower surfaces of the electrode assembly 580, the electrode assembly 580 may be fixed. Side surfaces of the upper and lower tongs of the gripper 550 are vertically enlarged to be clearly visible in FIGS. 5 to 9, but the upper and lower tongs of the gripper 550 may have a smaller thickness than illustrated in FIGS. 5 to 9.

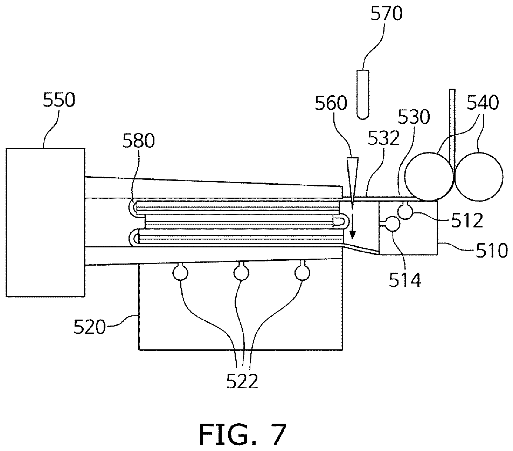

Next, a separator between an electrode assembly and a separator clamping device may be cut by a cutter (S430). In an embodiment, referring to FIG. 7, a portion of the separator 530 between the electrode assembly 580 and the separator clamping device 510 may be cut by the cutter 560. That is, both sides of the separator 530 to be cut may be fixed by the gripper 550, which grips the electrode assembly 580 (e.g., with the zigzag-shaped separator 530 surrounding the positive and negative electrode plates), and the first separator fixing portion 512 of the separator clamping device 510 (which holds a portion of the separator 530 extending beyond the zigzag-shaped separator 530 in the electrode assembly 580). Accordingly, tension of the portion of the separator 530 between the electrode assembly 580 and the separator clamping device 510 may be maintained. In a state where the tension of the separator 530 is maintained in this way, the cutter 560 may vertically descend to approach the separator 530 at a position between the stacking table 520 and the separator clamping device 510 and cut the separator 530.

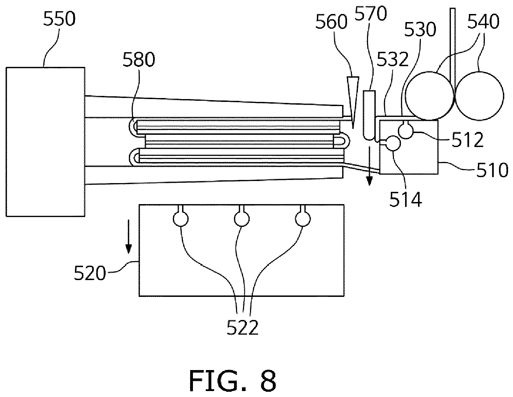

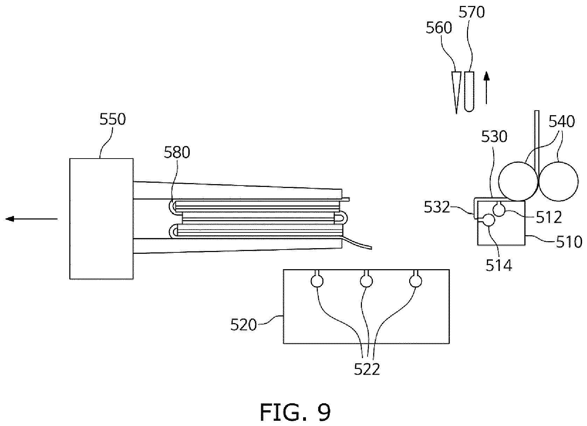

After operation S430, the electrode assembly 580 may be discharged from the stacking table 520 (S440). In an embodiment, referring to FIGS. 8 and 9, the electrode assembly 580 may be discharged from the stacking table 520. To this end, the stacking table 520 may be moveable in a horizontal direction and a vertical direction (e.g., descend downwardly) to be separated from the electrode assembly 580 (FIG. 8). Furthermore, the gripper 550 may move to the outside of (e.g., laterally away from) the stacking table 520 while gripping the electrode assembly 580 in order to discharge (e.g., separate) the electrode assembly 580 from the stacking table 520 (FIG. 9).

While operation S440 is performed or before operation S440 is performed, one surface of an end of a separator may be fixed to a second separator fixing portion of a separator clamping device by pressurizing the end of the cut separator by using a pusher (S450). In an embodiment, referring to FIG. 8, one surface of an end 532 of the cut separator (e.g., a cut end of the separator on the roller 540 on the right of FIG. 8) may be fixed to the second separator fixing portion 514 of the separator clamping device 510 by pressurizing (e.g., pressing) the end 532 of the cut separator by using the pusher 570. In some embodiments, the pusher 570 may vertically descend to approach the end 532 of the separator at a position adjacent to the separator clamping device 510 to pressurize the end 532 of the separator, thereby, guiding the end 532 of the separator to come into contact with the second separator fixing portion 514 formed on a side surface of the separator clamping device 510 (e.g., the second separator fixing portion 514 may be the second separator fixing portion 130 described previously with reference to FIGS. 1-3).

In this way, in a state where the end 532 of the separator is pressurized by the pusher 570 and comes into contact with the second separator fixing portion 514, the second separator fixing portion 514 may fix the end 532 of the separator by using vacuum suction force. For example, the second separator fixing portion 514 may include at least one second vacuum suction hole. Furthermore, by using the vacuum provided from a vacuum providing device, the second separator fixing portion 514 may fix the end 532 of the separator by a vacuum suction method through the second vacuum suction hole. For example, referring to FIG. 9, the cutter 560 and pusher 570 may be removed (e.g., while the gripper 550 moves the electrode assembly 580), while an edge of the separator rolled on the roller 540 is held by vacuum on a surface of the separator clamping device 510.

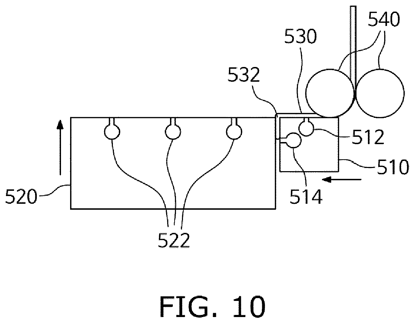

Furthermore, the separator clamping device may move such that the other surface of the end of the separator comes into contact with a side surface of the stacking table (S460). In an embodiment, referring to FIG. 10, the separator clamping device 510 may move (e.g., laterally or horizontally) such that the other surface of the end 532 of the separator comes into contact with a side surface of the stacking table 520. For example, after the electrode assembly 580 is completely discharged from the stacking table 520, the stacking table 520 may ascend again. Furthermore, the separator clamping device 510 fixes the end 532 of the separator to the side surface by using the second separator fixing portion 514 and may horizontally move toward the stacking table 520 in a state where a portion connected to the end 532 of the separator is fixed to the upper surface by the first separator fixing portion 512. Accordingly, the end 532 of the separator may be interposed between the stacking table 520 and the separator clamping device 510. In some embodiments, because the end 532 of the separator may be fixed by compression force of the stacking table 520 and the separator clamping device 510, a vacuum providing device may stop providing vacuum to the separator clamping device 510.

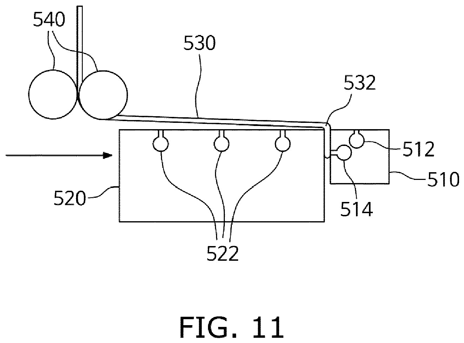

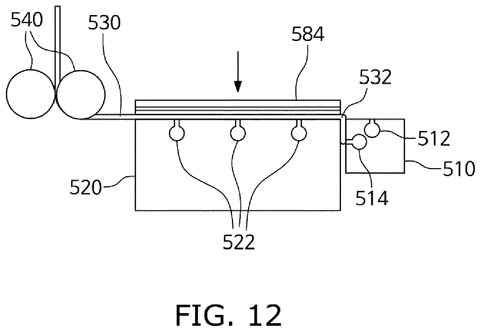

An electrode plate and a separator may be stacked on an upper side of the stacking table (S470). In an embodiment, referring to FIGS. 11 and 12, an electrode plate 584 (e.g., a positive electrode plate or a negative electrode plate) and the separator 530 may be stacked on an upper side of the stacking table 520. For example, in a state where the end 532 of the separator is fixed between the stacking table 520 and the separator clamping device 510, the separator clamping device 510 may laterally move together with the stacking table 520, and thereby, the separator 530 supplied through the roller 540 may be stacked on an upper side of the stacking table 520. Furthermore, the electrode plate 584 may be stacked on the separators 530 stacked on the upper side of the stacking table 520. Herein, the separator 530 that is first stacked on the stacking table 520 may be fixed onto the upper surface of the stacking table 520 by a vacuum suction method through vacuum suction hole 522 of the stacking table 520. Referring back to FIG. 5, after the electrode plate 584 and the separator 530 are completely stacked on the upper side of the stacking table 520 (e.g., the roller 540 may move multiple times along the upper surface of the stacking table 520 to form the zigzag-shaped separator surrounding the electrode plates 584 in the electrode assembly 580), the separator clamping device 510 may move to the outside of the stacking table 520 to be separated from the stacking table 520. For example, referring to FIG. 5, the separator clamping device 510 may move laterally away from the stacking table 520 to have a space therebetween, while the end 532 of the separator may remain hanging along a side surface of the stacking table 520. Thereafter, the process described above with reference to FIGS. 5 to 12 may be repeated.

As described above, an end of the separator 530 may be fixed by a vacuum suction method by using the separator clamping device 510, and thus, curliness of the end of the separator 530 and elongation of the separator 530 which occur while cutting the separator 530 may be reduced. Furthermore, in a state where an end of the separator 530 is fixed, the separator clamping device 510 moves together with the stacking table 520 to stack the separator 530 and the electrode plate 584 to manufacture an electrode assembly, and thus, the separator may be prevented from being misaligned. Accordingly, a positional alignment distribution between a separator and an electrode plate may be reduced, and thus, the quality of an electrode assembly may be increased, and defective electrode assemblies may be reduced.

By way of summation and review, due to a thin thickness and elongation of the separator, the separator may be misaligned during a process of aligning the separator. Furthermore, curliness of an end of the separator may occur during a process of cutting the separator. Accordingly, defective electrode assemblies may be manufactured due to abnormal alignment or abnormal shape of the separator and productivity of electrode assemblies may be reduced.

In contrast, embodiments of the present disclosure provide a separator clamping device, and a method and a system for manufacturing an electrode assembly for a rechargeable battery using the separator clamping device. That is, according to embodiments, a separator clamping device uses vacuum suction forces provided by a first separator fixing portion and a second separator fixing portion connected to a vacuum providing device through a vacuum passage, and accordingly, a separator may be fixed to the separator clamping device without slipping during a process of manufacturing an electrode assembly. Furthermore, by adjusting the sizes, number, intervals, and so on of first and second vacuum suction holes respectively formed in the first separator fixing portion and the second separator fixing portion of the separator clamping device, a separator with various characteristics may be fixed without leaving a suction mark. Accordingly, a separator may be prevented from being misaligned during a process of manufacturing an electrode assembly.

Further, according to embodiments of the present disclosure, an end of a separator may be fixed by a vacuum suction method by using a separator clamping device, and thus, curliness of the end of the separator and elongation of the separator which occur while cutting the separator may be reduced. Furthermore, in a state where an end of a separator is fixed, a separator clamping device moves together with a stacking table to stack the separator and an electrode plate to manufacture an electrode assembly, and thus, the separator may be prevented from being misaligned. Accordingly, a positional alignment distribution between a separator and an electrode plate may be reduced, and thus, the quality of an electrode assembly may be increased, and defective electrode assemblies may be reduced.

Although the present disclosure has been described above with respect to embodiments thereof, the present disclosure is not limited thereto. Various modifications and variations can be made thereto by those skilled in the art within the scope of the present disclosure and the equivalent scope of the appended claims

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
1. A separator clamping device (100), comprising:
   a body portion (110) including a vacuum passage (150), the vacuum passage (150) being connected to a vacuum device (151);
   a first separator fixing portion (120) on an upper surface of the body portion (110), the first separator fixing portion (120) being connected to the vacuum passage (150) and being configured to fix a separator onto the upper surface of the body portion (110) by a vacuum suction; and
   a second separator fixing portion (130) on a side surface of the body portion (110), the second separator fixing portion (130) being connected to the vacuum passage (150) and being configured to fix the separator onto the side surface of the body portion (110) by a vacuum suction.
2. The separator clamping device (100) according to clause 1, wherein:
   The first separator fixing portion (120) includes at least one first vacuum suction hole (122), and
   the second separator fixing portion (130) includes at least one second vacuum suction hole (132).
3. The separator clamping device (100) according to clause 2, wherein a number of the at least one first vacuum suction hole (122) is equal to a number of the at least one second vacuum suction hole (132).
4. The separator clamping device (100) according to clause 2 or 3, wherein a diameter of the second vacuum suction hole (132) is 1 mm, and a pitch of the second vacuum suction hole (132) is 12 mm.
5. The separator clamping device (100) according to clause 2 or 3, wherein a diameter of the second vacuum suction hole (132) is 1 mm, and a pitch of the second vacuum suction hole (132) is 25 mm.
6. The separator clamping device (100) according to any one of clauses 2 to 5, wherein a number of the at least one second vacuum suction hole (132) is determined based on a size of the separator.
7. The separator clamping device (100) according to any preceding clause, wherein the second separator fixing portion (130) protrudes from the side surface of the body portion (110), the side surface of the body portion (110) being perpendicular to the upper surface of the body portion (110).
8. The separator clamping device (100) according to any preceding clause, further comprising at least one connection portion (140) connecting the body portion (110) to the vacuum device (151).
9. A method (400) for manufacturing an electrode assembly for a rechargeable battery, the method comprising:
   fixing at least a part of a separator (530) to an upper surface of a separator clamping device (510) by a first separator fixing portion (512) (S410);
   fixing a first surface of a cut end of the separator (532) to a side surface of the separator clamping device (510) by a second separator fixing portion (514);
   moving and arranging the separator clamping device (510), such that a second surface of the cut end of the separator (532) is in contact with a side surface of a stacking table (520) (S460); and
   stacking an electrode plate (584) and the separator (530) on an upper side of the stacking table (520) (S470).
10. The method (400) according to clause 9, wherein fixing the first surface of the cut end of the separator (532) by the second separator fixing portion (514) includes:
   gripping, by a gripper (550), an electrode assembly (580) manufactured on the upper side of the stacking table (520) (S420);
   cutting, by a cutter (560), a portion of the separator (530) between the electrode assembly (580) and the separator clamping device (510), such that the cut end of the separator (532) is defined and is separated from the electrode assembly (580) (S430);
   discharging the electrode assembly (580) from the stacking table (520) (S440); and
   fixing, by a pusher (570), the first surface of the cut end of the separator (532) to the second separator fixing portion (514) by pressurizing the cut end of the separator (532) (S450).
11. The method (400) according to clause 9 or 10, wherein stacking the electrode plate (584) and the separator (530) on the upper side of the stacking table (520) includes stacking the electrode plate (584) and the separator 530) on the upper side of the stacking table (520) while the separator clamping device (510) contacts the side surface the stacking table (520) through the cut end of the separator (532), the separator clamping device (510) laterally moving together with the side surface the stacking table (520).
12. The method (400) according to clause 9, 10 or 11, wherein each of the first separator fixing portion (512) and the second separator fixing portion (514) fixes the separator (530) by a vacuum suction method.
13. The method (400) according to any one of clauses 9 to 12, wherein:
   the first separator fixing portion (512) includes at least one first vacuum suction hole,
   the second separator fixing portion (514) includes at least one second vacuum suction hole, and
   a number of the at least one first vacuum suction hole is equal to a number of the at least one second vacuum suction hole.
14. The method (400) according to any one of clauses 9 to 13, further comprising moving and arranging the separator clamping device (510) to be separated from the stacking table (520) in a state where the electrode plate (584) is stacked on the upper side of the stacking table.
15. A system for manufacturing an electrode assembly for a rechargeable battery, the system comprising:
   a stacking table (520) configured to stack an electrode plate (582) and a separator (530), the stacking table (520) being moveable in a vertical direction; and
   a separator clamping device (510) adjacent to a side surface of the stacking table (520) and being moveable in a horizontal direction, the separator clamping device (510) being configured to fix an end of the separator (530).

## Claims

1. A separator clamping device (100), comprising:
a body portion (110) including a vacuum passage (150), the vacuum passage (150) being connected to a vacuum device (151);
a first separator fixing portion (120) on an upper surface of the body portion (110), the first separator fixing portion (120) being connected to the vacuum passage (150) and being configured to fix a separator onto the upper surface of the body portion (110) by vacuum suction; and
a second separator fixing portion (130) on a side surface of the body portion (110), the second separator fixing portion (130) being connected to the vacuum passage (150) and being configured to fix the separator onto the side surface of the body portion (110) by vacuum suction.

2. The separator clamping device (100) as claimed in claim 1, wherein:
the first separator fixing portion (120) includes at least one first vacuum suction hole (122), and
the second separator fixing portion (130) includes at least one second vacuum suction hole (132).

3. The separator clamping device (100) as claimed in claim 2, wherein a number of the at least one first vacuum suction hole (122) is equal to a number of the at least one second vacuum suction hole (132).

4. The separator clamping device (100) as claimed in claim 2 or 3, wherein there are at least two of the second vacuum suction holes (132), a diameter of each second vacuum suction hole (132) is 1 mm, and a pitch of the second vacuum suction holes (132) is 12 mm.

5. The separator clamping device (100) as claimed in claim 2 or 3, wherein there are at least two of the second vacuum suction holes (132), a diameter of each second vacuum suction hole (132) is 1 mm, and a pitch of the second vacuum suction holes (132) is 25 mm.

6. The separator clamping device (100) as claimed in any one of claims 2 to 5, wherein a number of the at least one second vacuum suction hole (132) is determined based on a size of the separator.

7. The separator clamping device (100) as claimed in any preceding claim, wherein the second separator fixing portion (130) protrudes from the side surface of the body portion (110), the side surface of the body portion (110) being perpendicular to the upper surface of the body portion (110).

8. The separator clamping device (100) as claimed in any preceding claim, further comprising at least one connection portion (140) connecting the body portion (110) to the vacuum device (151).

9. A method (400) for manufacturing an electrode assembly for a rechargeable battery, the method comprising:
fixing at least a part of a separator (530) to an upper surface of a separator clamping device (510) by a first separator fixing portion (512) (S410);
fixing a first surface of a cut end (532) of the separator (530) to a side surface of the separator clamping device (510) by a second separator fixing portion (514);
moving and arranging the separator clamping device (510), such that a second surface of the cut end (532) of the separator (530) is in contact with a side surface of a stacking table (520) (S460); and
stacking an electrode plate (584) and the separator (530) on an upper side of the stacking table (520) (S470).

10. The method (400) as claimed in claim 9, wherein fixing the first surface of the cut end (532) of the separator (530) by the second separator fixing portion (514) includes:
gripping, by a gripper (550), an electrode assembly (580) manufactured on the upper side of the stacking table (520) (S420);
cutting, by a cutter (560), a portion of the separator (530) between the electrode assembly (580) and the separator clamping device (510), such that the cut end (532) of the separator (530) is defined and is separated from the electrode assembly (580) (S430);
discharging the electrode assembly (580) from the stacking table (520) (S440); and
fixing, by a pusher (570), the first surface of the cut end (532) of the separator (530) to the second separator fixing portion (514) by pressurizing the cut end (532) of the separator (530) (S450).

11. The method (400) as claimed in claim 9 or 10, wherein stacking the electrode plate (584) and the separator (530) on the upper side of the stacking table (520) includes stacking the electrode plate (584) and the separator (530) on the upper side of the stacking table (520) while the separator clamping device (510) contacts the side surface the stacking table (520) through the cut end (532) of the separator (530), the separator clamping device (510) laterally moving together with the side surface the stacking table (520).

12. The method (400) as claimed in claim 9, 10 or 11, wherein each of the first separator fixing portion (512) and the second separator fixing portion (514) fixes the separator (530) by a vacuum suction method.

13. The method (400) as claimed in any one of claims 9 to 12, wherein:
the first separator fixing portion (512) includes at least one first vacuum suction hole,
the second separator fixing portion (514) includes at least one second vacuum suction hole, and
a number of the at least one first vacuum suction hole is equal to a number of the at least one second vacuum suction hole.

14. The method (400) as claimed in any one of claims 9 to 13, further comprising moving and arranging the separator clamping device (510) to be separated from the stacking table (520) in a state where the electrode plate (584) is stacked on the upper side of the stacking table (520).

15. A system for manufacturing an electrode assembly for a rechargeable battery, the system comprising:
a stacking table (520) configured to stack an electrode plate (582) and a separator (530), the stacking table (520) being moveable in a vertical direction; and
a separator clamping device (510) adjacent to a side surface of the stacking table (520) and being moveable in a horizontal direction, the separator clamping device (510) being configured to fix an end of the separator (530).

## Amended claims

### Amended claims in accordance with Rule 137(2) EPC.

1. A method (400) for manufacturing an electrode assembly for a rechargeable battery, the method comprising:
fixing at least a part of a separator (530) to an upper surface of a separator clamping device (510) by a first separator fixing portion (512) (S410);
fixing a first surface of a cut end (532) of the separator (530) to a side surface of the separator clamping device (510) by a second separator fixing portion (514);
moving and arranging the separator clamping device (510), such that a second surface of the cut end (532) of the separator (530) is in contact with a side surface of a stacking table (520) (S460); and
stacking an electrode plate (584) and the separator (530) on an upper side of the stacking table (520) (S470),
wherein the stacking the electrode plate (584) and the separator (530) on the upper side of the stacking table (520) includes stacking the electrode plate (584) and the separator (530) on the upper side of the stacking table (520) while the separator clamping device (510) contacts the side surface of the stacking table (520) through the cut end (532) of the separator (530), the separator clamping device (510) laterally moving together with the side surface of the stacking table (520)..

2. The method (400) as claimed in claim 1, wherein fixing the first surface of the cut end (532) of the separator (530) by the second separator fixing portion (514) includes:
gripping, by a gripper (550), an electrode assembly (580) manufactured on the upper side of the stacking table (520) (S420);
cutting, by a cutter (560), a portion of the separator (530) between the electrode assembly (580) and the separator clamping device (510), such that the cut end (532) of the separator (530) is defined and is separated from the electrode assembly (580) (S430);
discharging the electrode assembly (580) from the stacking table (520) (S440); and
fixing, by a pusher (570), the first surface of the cut end (532) of the separator (530) to the second separator fixing portion (514) by pressurizing the cut end (532) of the separator (530) (S450).

3. The method (400) as claimed in claim 1 or 2, wherein each of the first separator fixing portion (512) and the second separator fixing portion (514) fixes the separator (530) by a vacuum suction method.

4. The method (400) as claimed in any one of claims 1 to 3, wherein:
the first separator fixing portion (512) includes at least one first vacuum suction hole,
the second separator fixing portion (514) includes at least one second vacuum suction hole, and
a number of the at least one first vacuum suction hole is equal to a number of the at least one second vacuum suction hole.

5. The method (400) as claimed in any one of claims 1 to 4, further comprising moving and arranging the separator clamping device (510) to be separated from the stacking table (520) in a state where the electrode plate (584) is stacked on the upper side of the stacking table (520).

6. The method (400) as claimed in any one of claims 1 to 5, wherein:
the first separator fixing portion (512) includes at least one first vacuum suction hole, and
the second separator fixing portion (514) includes at least one second vacuum suction hole.

7. The method of claim 6, wherein a number of the at least one first vacuum suction hole is equal to a number of the at least one second vacuum suction hole.

8. The method of claim 6 or claim 7, wherein there are at least two of the second vacuum suction holes (132), a diameter of each second vacuum suction hole (132) is 1 mm, and a pitch of the second vacuum suction holes (132) is 12 mm.

9. The method of claim 6 or claim 7, wherein there are at least two of the second vacuum suction holes (132), a diameter of each second vacuum suction hole (132) is 1 mm, and a pitch of the second vacuum suction holes (132) is 25 mm.

10. The method of any one of claims 6 to 9, wherein a number of the at least one second vacuum suction hole (132) is determined based on a size of the separator.

11. The method of any one of the preceding claims, wherein the separator clamping device (100), comprising:
a body portion (110) including a vacuum passage (150), the vacuum passage (150) being connected to a vacuum device (151);
the first separator fixing portion (120) on an upper surface of the body portion (110), the first separator fixing portion (120) being connected to the vacuum passage (150) and being configured to fix the separator onto the upper surface of the body portion (110) by vacuum suction; and
the second separator fixing portion (130) on a side surface of the body portion (110), the second separator fixing portion (130) being connected to the vacuum passage (150) and being configured to fix the separator onto the side surface of the body portion (110) by vacuum suction.

12. The method of claim 11, wherein the second separator fixing portion (130) protrudes from the side surface of the body portion (110), the side surface of the body portion (110) being perpendicular to the upper surface of the body portion (110).

13. The method of claim 11 or claim 12, further comprising at least one connection portion (140) connecting the body portion (110) to the vacuum device (151).
